# EUROPEAN PATENT APPLICATION

(11) **EP 4 553 826 A1**
(43) Date of publication of application: **14.05.2025**
(21) Application number: 24206584.5
(22) Date of filing: 15.10.2024
(51) Int. Cl.: G10K 15/02, B60Q 5/00

(54) **VEHICLE**

(30) Priority: 08.11.2023 JP 2023190753
(71) Applicant: TOYOTA JIDOSHA KABUSHIKI KAISHA, Aichi-ken, 471-8571 (JP)
(72) Inventor: IMAMURA, Tatsuya, Toyota-shi, 471-8571 (JP); ISAMI, Yoichiro, Toyota-shi, 471-8571 (JP); MOTEKI, Taro, Toyota-shi, 471-8571 (JP)
(74) Representative: TBK

(57) **Abstract**

A vehicle (100; 200; 300) according to an embodiment of the present disclosure includes a transmission (8) that is provided between a power source and drive wheels (18, 26), and that is configured to switch a gear ratio manually by a user, and a sound generator that is configured to artificially generates a sound when the vehicle (100; 200; 300) is traveling. The sound generator includes at least a processor (120; 130; 220; 320). The processor (120; 130; 220; 320) is configured to execute at least one of raising a frequency of the sound the higher the gear ratio of the transmission (8) is, and increasing a pressure of the sound the higher the gear ratio of the transmission (8) is.

## Description

### BACKGROUND OF THE INVENTION

### 1. Field of the Invention

The present disclosure relates to a vehicle equipped with a power source that is quieter than an internal combustion engine, and a transmission that enables a user to manually switch a gear ratio.

### 2. Description of Related Art

Japanese Unexamined Patent Application Publication No. 2022-030862 (JP 2022-030862 A) discloses technology relating to a battery electric vehicle that can pseudo-recreate manual shifting operations of a vehicle that is equipped with a manual transmission and that is powered by an internal combustion engine (hereinafter referred to as a manual shift engine vehicle), by controlling an electric motor. The battery electric vehicle according to this technology is equipped with a pseudo shift lever, and causes the electric motor to output torque in accordance with a shift position of the pseudo shift lever and an accelerator operation amount. Also, the battery electric vehicle according to this technology calculates virtual engine revolutions based on the shift position of the pseudo shift lever and the accelerator operation amount, and generates an engine sound in accordance with the virtual engine revolutions.

### SUMMARY OF THE INVENTION

On the other hand, equipping battery electric vehicles with real manual transmissions is being studied as well. Changing the gear ratio through a shift operation of the manual transmission changes the revolutions of the electric motor. However, although there is some change in sound generated by the electric motor as the revolutions change, such change is far smaller than change in sound generated by an internal combustion engine. Accordingly, users, and especially users accustomed to conventional manual shift engine vehicles, may experience an unpleasant sensation with the difference between expected change in sound when performing shift operations and actual change in sound produced by the power source.

The present disclosure provides a vehicle that can reduce the unpleasant sensation felt by users who are accustomed to conventional manual shift engine vehicles due to the lack of expected change in sound when operating the transmission.

According to a first aspect of the present disclosure, a vehicle includes a transmission. The transmission is configured to switch a gear ratio manually by a user, and is provided between a power source and drive wheels. According to the first aspect, the vehicle is provided with a sound generator that is configured to artificially generate a sound when the vehicle is traveling. The sound generator includes at least a processor and a speaker. The processor is configured to execute at least one of raising a frequency of the sound that is generated the higher the gear ratio of the transmission is, and increasing a pressure of the sound that is generated the higher the gear ratio of the transmission is.

According to the vehicle of the present disclosure, when a driver that is the user operates the transmission, at least one of the sound pressure and the frequency of the sound generated from the sound generator changes in accordance with the change in the gear ratio in conjunction with the operation. The change in sound, which is increase in sound pressure and higher frequency, the greater the gear ratio of the transmission is, is similar to the change in engine sound that occurs in conjunction with shifting operations in conventional manual shift engine vehicles. Therefore, even when the user of the vehicle is accustomed to a conventional manual shift engine vehicle, the user can be suppressed from experiencing an unpleasant sensation due to the expected change in sound not being obtained when operating the transmission.

In the vehicle according to the first aspect, the processor may be configured to execute at least one of raising the frequency of the sound the higher a vehicle speed of the vehicle is, and increasing the pressure of the sound the higher the vehicle speed is.

In the vehicle according to the first aspect, the processor may be configured to execute at least one of raising the frequency of the sound the greater an accelerator operation amount is, and increasing the pressure of the sound the greater the accelerator operation amount is.

According to a second aspect of the present disclosure, in the vehicle of the above aspect, the power source may be an electric motor.

The vehicle of the second aspect may further include a pseudo shifter that is configured to select one virtual shift position out of a plurality of virtual shift positions. Also, the processor may be configured to execute at least one of raising the frequency of the sound the lower a stage of the virtual shift position selected by the pseudo shifter is, and increasing the pressure of the sound the lower the stage of the virtual shift position selected by the pseudo shifter is.

The vehicle of the above aspect may further include a motor processor configured to change a torque of the electric motor in accordance with the virtual shift position selected by the pseudo shifter, the vehicle speed, and the accelerator operation amount. The motor processor may be configured to increase the torque at a same vehicle speed and a same accelerator operation amount, the lower the stage of the virtual shift position selected by the pseudo shifter is, and also to limit a vehicle speed range at which the virtual shift position is selectable to a lower speed, the lower the stage of the virtual shift position selected by the pseudo shifter is.

According to a third aspect of the present disclosure, the vehicle of the second aspect may further include a pseudo clutch manipulator that is configured to be operated against a reaction force from a start point position to an end point position. Also, the processor may be configured to execute at least one of temporarily lowering the frequency of the sound that is generated, and temporarily reducing the pressure of the sound that is generated, while the pseudo clutch manipulator is being operated from the end point position to the start point position.

The vehicle according to the third aspect of the present disclosure may further include a motor processor that is configured to change a torque of the electric motor in accordance with an operation amount of the pseudo clutch manipulator, the vehicle speed, and the accelerator operation amount. The motor processor may be configured to reduce the torque when the pseudo clutch manipulator is at the end point position, as compared to partway in a process of returning from the end point position to the start point position, and to generate the torque partway in the process of returning the pseudo clutch manipulator from the end point position to the start point position.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of a vehicle according to a first embodiment of the present disclosure;
FIG. 2 is a diagram showing an example of a sound pressure map according to the first embodiment of the present disclosure;
FIG. 3 is a diagram showing another example of a sound pressure map according to the first embodiment of the present disclosure;
FIG. 4 is a diagram showing a flow of sound pressure control according to the first embodiment of the present disclosure;
FIG. 5 is a diagram illustrating a modification of the vehicle according to the first embodiment of the present disclosure;
FIG. 6 is a diagram illustrating a configuration of a vehicle according to a second embodiment of the present disclosure;
FIG. 7 is a diagram showing an example of a vehicle model according to the second embodiment of the present disclosure;
FIG. 8 is a diagram showing an example of a sound pressure map according to the second embodiment of the present disclosure;
FIG. 9 is a diagram showing a flow of sound pressure control according to the second embodiment of the present disclosure;
FIG. 10 is a diagram illustrating a configuration of a vehicle according to a third embodiment of the present disclosure;
FIG. 11 is a diagram showing an example of a vehicle model according to the third embodiment of the present disclosure;
FIG. 12 is a diagram showing an example of a sound pressure map according to the third embodiment of the present disclosure;
FIG. 13 is a diagram showing a flow of sound pressure control according to the third embodiment of the present disclosure; and
FIG. 14 is a diagram showing an example of change in sound pressure due to the sound pressure control according to the third embodiment of the present disclosure.

### DETAILED DESCRIPTION OF EMBODIMENTS

### 1. First Embodiment

### 1-1. Configuration of Power System of Vehicle

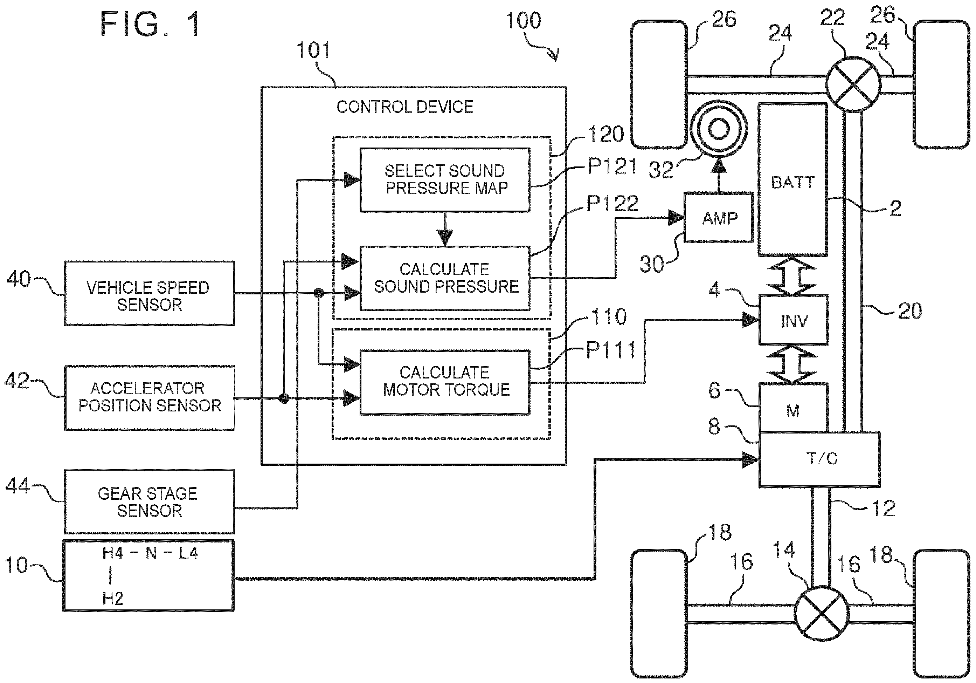

FIG. 1 is a diagram that schematically illustrates a configuration of a vehicle 100 according to a first embodiment. First, a configuration of a power system of the vehicle 100 will be described with reference to FIG. 1.

The vehicle 100 includes an electric motor (M) 6 as a traction power source. The vehicle 100 further includes a battery (BATT) 2 and an inverter (INV) 4. The battery 2 stores electrical energy for driving the electric motor 6. That is to say, the vehicle 100 is a battery electric vehicle (BEV) that runs on the electrical energy stored in the battery 2. The electric motor 6 is, for example, a three-phase alternating current motor. The inverter 4 is, for example, a voltage inverter, and controls torque of the electric motor 6 by pulse-width modulation (PWM) control.

The vehicle 100 includes a transfer case (T/C) 8. An output shaft of the electric motor 6 is connected to the transfer case 8. The transfer case 8 is connected to a rear differential gear 14 by a rear propeller shaft 12. The rear differential gear 14 is connected to right and left rear wheels 18 by right and left rear drive shafts 16. The transfer case 8 is also connected to a front differential gear 22 by a front propeller shaft 20. The front differential gear 22 is connected to right and left front wheels 26 by right and left front drive shafts 24.

The transfer case 8 is a device that switches between two-wheel drive and four-wheel drive. The transfer case 8 is coupled to a shift device 10 provided in a vehicle cabin. The shift device 10 includes a lever that is omitted from illustration. Switching between two-wheel drive and four-wheel drive is mechanically performed by a driver operating the lever of the shift device 10. When four-wheel drive is selected, driving force of the electric motor 6 is distributed to the rear propeller shaft 12 and the front propeller shaft 20 in the transfer case 8, such that the driving force is transmitted to the rear wheels 18 and the front wheels 26. When two-wheel drive is selected, the front propeller shaft 20 is disconnected from a power transmission path in the transfer case 8, such that the driving force of the electric motor 6 is transmitted only to the rear wheels 18.

The transfer case 8 includes a speed change mechanism that switches between high gear and low gear. High gear is a gear with a small gear ratio, and low gear is a gear with a large gear ratio. Switching between high gear and low gear can be performed when four-wheel drive is selected. High gear is used when two-wheel drive is selected. When four-wheel drive is selected, switching between high gear and low gear is mechanically performed by the driver operating the lever of the shift device 10. By operating the lever of the shift device 10, the driver can switch between two-wheel drive in high gear and four-wheel drive in high gear, and can switch between four-wheel drive in high gear and four-wheel drive in low gear via neutral.

### 1-2. Configuration of Control System of Vehicle

Next, a configuration of a control system of the vehicle 100 will be described with reference to FIG. 1.

The vehicle 100 includes a vehicle speed sensor 40. At least one of wheel speed sensors, omitted from illustration, provided to each of the right and left front wheels 26 and the right and left rear wheels 18, is used as the vehicle speed sensor 40. The vehicle 100 also includes an accelerator position sensor 42. The accelerator position sensor 42 is provided on an accelerator pedal that is omitted from illustration, and outputs a signal indicating an amount of depression of the accelerator pedal, i.e., an accelerator operation amount. The vehicle 100 further includes a gear stage sensor 44. The gear stage sensor 44 is provided in the shift device 10 and outputs a signal indicating a gear stage of the transfer case 8 that is selected by operating the lever. Hereinafter, a gear stage that realizes two-wheel drive in high gear will be expressed as "H2", a gear stage that realizes four-wheel drive in high gear as "H4", a gear stage that realizes four-wheel drive in low gear as "L4", and neutral as "N".

The vehicle 100 includes a control device 101. Sensors and equipment to be controlled that are installed in the vehicle 100 are connected to the control device 101 via an in-vehicle network. The vehicle speed sensor 40, the accelerator position sensor 42, and the gear stage sensor 44 are examples of the sensors installed in the vehicle 100. The control device 101 is typically an electronic control unit (ECU). The control device 101 may be a combination of a plurality of ECUs. The control device 101 includes an interface, memory, and a processor, which are omitted from illustration. The in-vehicle network is connected to the interface. The memory includes random access memory (RAM) for temporarily recording data, and read-only memory (ROM) for storing programs that are executable by the processor and various types of data related to the programs. Each program is made up of a plurality of instructions. The processor reads the programs and the data from the memory, executes the programs, and generates control signals based on signals acquired from the sensors. The control device 101 may include one processor or may include a plurality of processors.

The control device 101 includes a motor control device 110 and a sound control device 120. Specifically, the processor functions at least as the motor control device 110 and the sound control device 120 by the programs stored in the memory being executed by the processor. The processor functioning as the motor control device 110 and the processor functioning as the sound control device 120 may be different processors, or may be the same processor. Note that the processor that functions as a motor control device may be referred to as a motor processor, and the processor that functions as a sound control device may be referred to simply as a processor.

An object to be controlled by the motor control device 110 is the inverter 4. Vehicle speed obtained from signals from the vehicle speed sensor 40 and the accelerator operation amount obtained from signals from the accelerator position sensor 42 are input to the motor control device 110. The motor control device 110 executes processing P111 based on the vehicle speed and the accelerator operation amount. In the processing P111, the torque to be generated by the electric motor 6 is calculated. The motor control device 110 has a motor torque map in which the accelerator operation amount and the vehicle speed are parameters. The motor control device 110 inputs the vehicle speed and the accelerator operation amount into the motor torque map, and controls the inverter 4 such that the electric motor 6 generates the torque obtained from the motor torque map.

An object to be controlled by the sound control device 120 is an amplifier 30. The amplifier 30 changes sound pressure of a speaker 32 installed in the vehicle cabin of the vehicle 100. An artificially generated sound is output from the speaker 32. The sound control device 120 can generate various types of sounds. One of such artificial sounds is a simulated engine sound that mimics an engine sound of a conventional engine vehicle. The sound control device 120 controls the amplifier 30 to change the sound pressure of the simulated engine sound emitted from the speaker 32. The sound control device 120 makes up a sound generator along with the speaker 32 and the amplifier 30.

The gear stage of the transfer case 8 obtained from signals from the gear stage sensor 44 is input to the sound control device 120. The sound control device 120 executes processing P121 based on the gear stage. In the processing P121, a sound pressure map to be used to control the amplifier 30 is selected. Sound pressure maps includes a map for low gear and a map for high gear. The map for low gear is a map that is selected when the gear stage is L4. The map for high gear is a map that is selected when the gear stage is H4 and when the gear stage is H2. The sound control device 120 selects the sound pressure map in accordance with the current gear stage of the transfer case 8.

The vehicle speed obtained from signals from the vehicle speed sensor 40 and the accelerator operation amount obtained from signals from the accelerator position sensor 42 are also input to the sound control device 120. The sound control device 120 executes processing P122 based on the vehicle speed and the accelerator operation amount, using the sound pressure map selected in the processing P121. In the processing P122, sound pressure in accordance with the vehicle speed and the accelerator operation amount is calculated using the sound pressure map. The sound control device 120 controls the amplifier 30 so as to realize the sound pressure calculated in the processing P122.

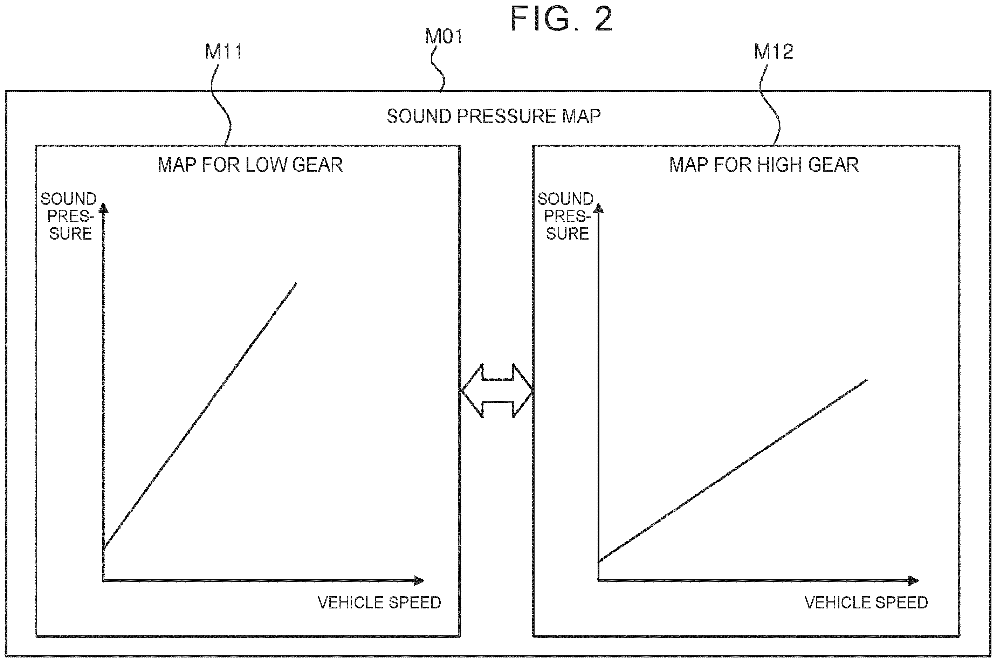

Now, FIG. 2 shows an example of the sound pressure map according to the first embodiment. In a sound pressure map M01, sound pressure data is set with respect to the vehicle speed, such that the sound pressure increases as the vehicle speed increases. Difference between a map for low gear M11 and a map for high gear M12 is in the magnitude of the sound pressure for the same vehicle speed. The two maps M11 and M12 are created such that, when compared at the same vehicle speed, the map for low gear M11 has a greater sound pressure, and the map for high gear M12 has a smaller sound pressure. In the processing P122, the sound pressure is calculated from the vehicle speed using the sound pressure map selected from the map for low gear M11 and the map for high gear M12 in the processing P 121.

The accelerator operation amount is used to calculate the sound pressure when no vehicle speed is being generated. In conventional engine vehicles, there is a time lag between when the accelerator pedal is depressed and when the vehicle speed is generated. However, engine sound is still generated during this time lag. On the other hand, when the vehicle is in a stopped state with the accelerator pedal not depressed, either no engine sound is generated, or only a slight idling sound is generated. Accordingly, in the processing P121, the sound pressure when the vehicle speed is not being generated is calculated based on an idling position. In the map for low gear M11 and the map for high gear M12, the sound pressure when the accelerator operation amount is on is set with respect to the vehicle speed.

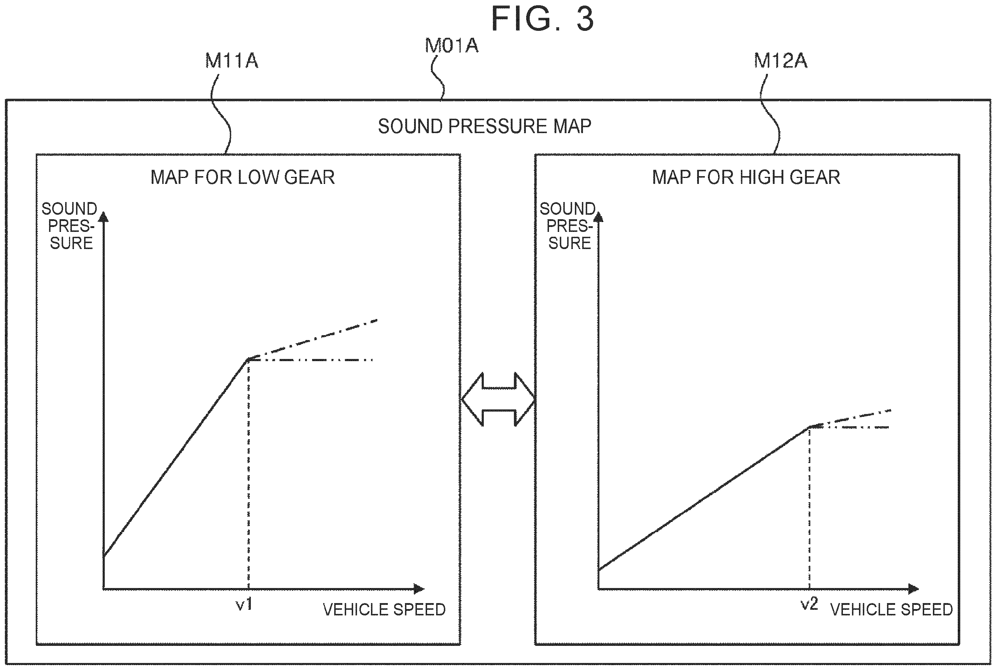

The sound pressure map is not limited to the example shown in FIG. 2. It is sufficient for the sound pressure map to be created such that the sound pressure calculated using the map for low gear is greater than the sound pressure calculated using the map for high gear, when compared at the same vehicle speed. The sound pressure map M01A shown in FIG. 3 is another example of a sound pressure map that can be used in the sound control device 120. As indicated by the long dashed short dashed line in FIG. 3, when the vehicle speed exceeds a threshold speed, rate of increase in sound pressure relative to increase in vehicle speed may be reduced. Alternatively, as indicated by the long dashed double-short dashed line in FIG. 3, when the vehicle speed exceeds the threshold speed, the sound pressure may be maintained at a constant value regardless of increase in the vehicle speed. A threshold speed v1 in the map for low gear M11A may be the same speed as a threshold speed v2 in the map for high gear M12A, or may be a lower speed. According to the setting of the sound pressure map shown in FIG. 3, the sound pressure can be suppressed from becoming excessive for occupants in a high speed range.

### 1-3. Sound Pressure Control

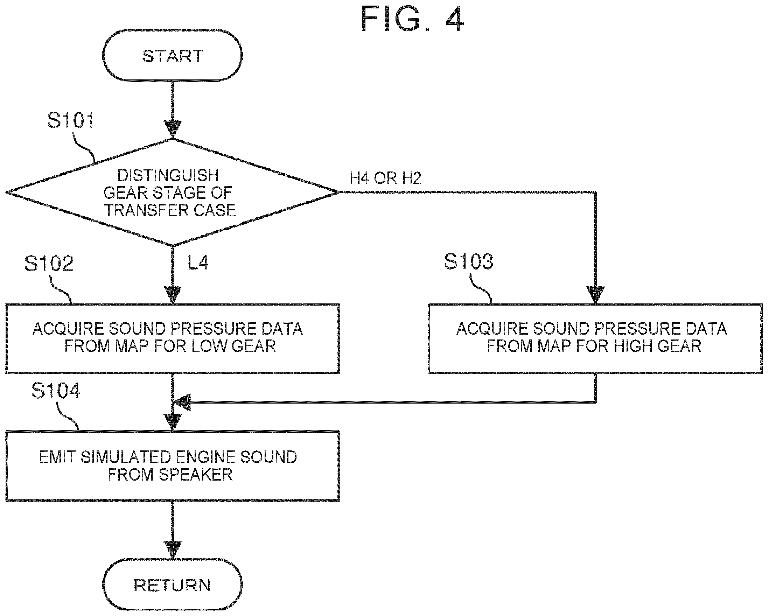

FIG. 4 is a diagram showing a flow of sound pressure control executed by the control device 101 in the vehicle 100. First, in step S101, the gear stage of the transfer case 8 is distinguished. When the gear stage is L4, the flow advances to step S102, in which sound pressure data in accordance with the vehicle speed is acquired from the map for low gear. When the gear stage is H4 or H2, the flow advances to step S103, in which sound pressure data in accordance with the vehicle speed is acquired from the map for high gear. Then, in step S104, the simulated engine sound is emitted from the speaker 32 in accordance with the sound pressure data acquired in step S102 or step S103.

When the gear stage of the transfer case 8 is shifted from H4 to L4, the sound pressure map is switched from the map for high gear to the map for low gear, and the sound pressure of the engine sound emitted from the speaker 32 is increased. Conversely, when the gear stage is switched from L4 to H4, the sound pressure map is switched from the map for low gear to the map for high gear, and the sound pressure of the simulated engine sound emitted from the speaker 32 is reduced. The sound pressure of the simulated engine sound increasing as the gear ratio increases and the sound pressure of the simulated engine sound decreasing as the gear ratio decreases is similar to the change in engine sound that occurs in conjunction with shifting operations in conventional manual shift engine vehicles. Accordingly, by changing the sound pressure of the simulated engine sound in accordance with the gear shifting operations of the driver through the above-described sound pressure control, the expectations of drivers, particularly of drivers who are accustomed to conventional manual shift engine vehicles, can be satisfied.

### 1-4. Modifications

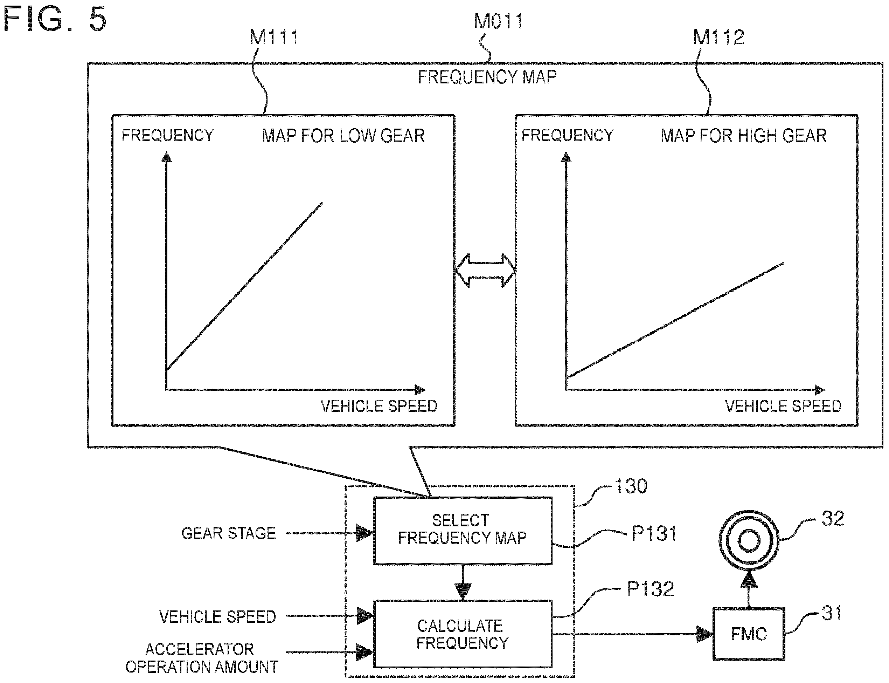

Next, modifications of the vehicle according to the present embodiment will be described with reference to FIG. 5. In the modification, the amplifier 30 illustrated in FIG. 1 is replaced by a frequency modulation controller (FMC) 31 illustrated in FIG. 5, and the sound control device 120 illustrated in FIG. 1 is replaced by a sound control device 130 illustrated in FIG. 5.

An object of control of the sound control device 130 is the frequency modulation controller 31. The frequency modulation controller 31 changes frequency of the simulated engine sound emitted from the speaker 32. The sound control device 130 controls the frequency modulation controller 31 to change the frequency of the simulated engine sound emitted from the speaker 32. In the modification, the sound control device 130 makes up a sound generator along with the speaker 32 and the frequency modulation controller 31.

The gear stage of the transfer case 8 is input to the sound control device 130. The sound control device 130 executes processing P131 based on the gear stage. In the processing P131, a frequency map M011 to be used to control the frequency modulation controller 31 is selected. The frequency map M011 includes a map for low gear M111 and a map for high gear M1 12. The map for low gear M111 is a map that is selected when the gear stage is L4. The map for high gear M112 is a map that is selected when the gear stage is H4 or when the gear stage is H2. In the frequency map M011, frequency data is set with respect to vehicle speed so that the frequency increases as the vehicle speed increases. Difference between the map for low gear M111 and the map for high gear M112 is in the height of the frequency for the same vehicle speed. The two maps M111 and M112 are created such that, when compared at the same vehicle speed, the map for low gear M111 has a higher frequency, and the map for high gear M112 has a lower frequency. The sound control device 130 selects the frequency map M011 in accordance with the current gear stage of the transfer case 8.

Further, the vehicle speed and the accelerator operation amount are input to the sound control device 130. The sound control device 130 executes processing P132 based on the vehicle speed and the accelerator operation amount, using the frequency map M011 selected in the processing P131. In the processing P132, a frequency corresponding to the vehicle speed and the accelerator operation amount is calculated using a frequency map. In the same way as with the sound pressure map, the accelerator operation amount is used to calculate the frequency when no vehicle speed is being generated. The sound control device 130 controls the frequency modulation controller 31 to realize the frequency calculated in processing P132. Note that the frequency map is not limited to the example in FIG. 5. It is sufficient for the frequency map to be created such that, when compared at the same vehicle speed, the frequency calculated using the map for low gear is higher than the frequency calculated using the map for high gear. For example, when the vehicle speed exceeds the threshold speed, the rate of increase in frequency with respect to increase in vehicle speed may be reduced, as in the example of the sound pressure map shown in FIG. 3, or the frequency may be maintained at a constant value regardless of increase in vehicle speed.

The frequency of the simulated engine sound becoming higher as the gear ratio increases and the frequency of the simulated engine sound becoming lower as the gear ratio decreases is similar to the change in engine sound that occurs with shifting operations in conventional manual shift engine vehicles. Accordingly, by changing the frequency of the simulated engine sound in accordance with the gear shifting operations of the driver through the frequency control according to the above-described modification, the expectations of drivers, particularly of drivers who are accustomed to conventional manual shift engine vehicles, can be satisfied.

As another modification, the speaker 32 may be provided with both the amplifier 30 and the sound control device 120 illustrated in FIG. 1, and the frequency modulation controller 31 and the sound control device 130 illustrated in FIG. 5. In other words, both the sound pressure and the frequency of the simulated engine sound may be changed in accordance with the gear shifting operations of the driver. Note that an equalizer may be used instead of the frequency modulation controller as a device for changing the frequency of the simulated engine sound.

As a modification of the power system, a transmission that enables the driver to manually switch between three or more shift positions may be provided instead of the transfer case 8. The transmission may a manual transmission by which the driver operates a clutch, a semi-automatic transmission by which the clutch is mechanically operated instead of by the driver, a dual clutch transmission, or a continuously variable transmission, as long as the transmission enables manual operation by the driver. Also, as a modification of the power system, a power source other than the electric motor 6 that is quieter than an internal combustion engine, such as a hybrid system (including a plug-in hybrid system), for example, may be provided instead of the electric motor 6.

### 2. Second Embodiment

### 2-1. Configuration of Control System of Vehicle

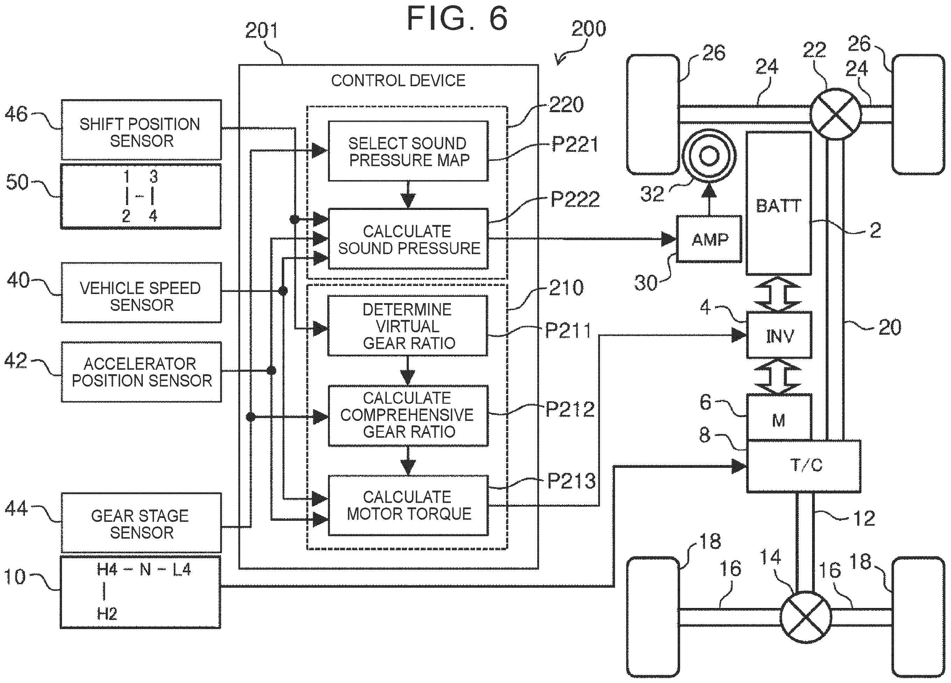

FIG. 6 is a diagram that schematically illustrates a configuration of a vehicle 200 according to a second embodiment. Of the components of the vehicle 200 illustrated in FIG. 6, those having functions in common with those of the components of the vehicle 100 according to the first embodiment are denoted by the same signs. A configuration of a power system of the vehicle 200 is the same as that of the power system of the vehicle 100 according to the first embodiment, and accordingly description thereof will be omitted, and a configuration of a control system of the vehicle 200 will be described.

The vehicle 200 further includes a pseudo shifter 50 in addition to the configuration of the vehicle 100 according to the first embodiment. The pseudo shifter 50 is a dummy that is different from a real shifter. The pseudo shifter 50 has a structure mimicking that of a shifter provided in a conventional manual shift engine vehicle. For example, the pseudo shifter 50 may have a structure mimicking a shift lever (shift stick) provided in a console, or may have a structure mimicking shift paddles attached to a steering wheel. The pseudo shifter 50 herein has a structure mimicking that of a shift lever, and is movable between shift positions along an H-pattern gate. The vehicle 200 is not provided with an actual transmission, and accordingly the shift positions of the pseudo shifter 50 are virtual shift positions. In the example illustrated in FIG. 6, the virtual shift positions of first gear, second gear, third gear, and fourth gear are provided. In a conventional manual shift engine vehicle, first gear is the shift position with the largest gear ratio, and second gear, third gear, and fourth gear have smaller gear ratios in that order.

The vehicle 200 includes a shift position sensor 46. The shift position sensor 46 is provided in the pseudo shifter 50 and outputs signals indicating virtual shift positions selected by the pseudo shifter 50. The vehicle 200 also includes the vehicle speed sensor 40, the accelerator position sensor 42, and the gear stage sensor 44. In addition to these sensors, many other sensors are provided in the vehicle 200.

The vehicle 200 includes a control device 201. Sensors and equipment to be controlled that are installed in the vehicle 200 are connected to the control device 201 via an in-vehicle network. In the same way as with the control device 101 according to the first embodiment, the control device 201 is typically an electronic control unit, and includes an interface, memory, and a processor, which are omitted from illustration. The control device 201 includes a motor control device 210 and a sound control device 220. Specifically, the processor functions at least as the motor control device 210 and the sound control device 220 by programs stored in the memory being executed by the processor. The processor functioning as the motor control device 210 and the processor functioning as the sound control device 220 may be different processors, or may be the same processor.

An object to be controlled by the motor control device 210 is the inverter 4. The virtual shift position of the pseudo shifter 50 obtained from signals from the shift position sensor 46 is input to the motor control device 210. The motor control device 210 executes processing P211 based on the virtual shift position. In the processing P211, a virtual gear ratio of the vehicle 200 is determined using a manual shift engine vehicle model described later. The virtual gear ratio is a gear ratio of a transmission that is virtually realized by torque control of the electric motor 6 using the manual shift engine vehicle model.

The gear stage of the transfer case 8 obtained from signals from the gear stage sensor 44 is input to the motor control device 210. The motor control device 210 executes processing P212 based on the gear stage of the transfer case 8 and the virtual gear ratio determined in the processing P211. In the processing P212, a comprehensive gear ratio from the electric motor 6 to the transfer case 8 is calculated. The comprehensive gear ratio is a gear ratio obtained by multiplying the gear ratio of the transfer case 8, determined by the gear stage, by the virtual gear ratio.

The vehicle speed obtained from signals from the vehicle speed sensor 40 and the accelerator operation amount obtained from signals from the accelerator position sensor 42 are further input to the motor control device 210. The motor control device 210 executes processing P213 based on the vehicle speed, the accelerator operation amount, and the comprehensive gear ratio calculated in the processing P212. In the processing P213, the torque to be generated by the electric motor 6 is calculated using the manual shift engine vehicle model. The motor control device 210 inputs the vehicle speed, the accelerator operation amount, and the comprehensive gear ratio into the manual shift engine vehicle model, and controls the inverter 4 so as to cause the electric motor 6 to generate the torque obtained using the manual shift engine vehicle model.

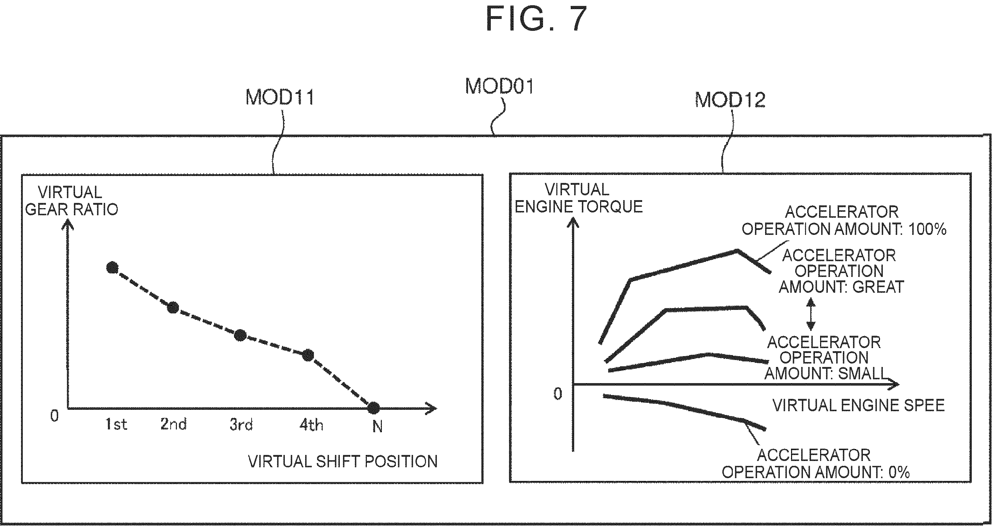

Now, a manual shift engine vehicle model used by the motor control device 210 will be described with reference to FIG. 7. As shown in FIG. 7, a manual shift engine vehicle model MOD01 is made up of a transmission model MOD11 and an engine model MOD12. An engine virtually realized by the manual shift engine vehicle model MOD01 will be referred to as "virtual engine", and a transmission that is virtually realized will be referred to as "virtual transmission". The transmission model MOD11 models the virtual transmission. The engine model MOD12 models the virtual engine.

The transmission model MOD11 calculates the virtual gear ratio. The virtual gear ratio is a gear ratio determined by the virtual shift position of the virtual transmission. A virtual gear ratio is set for each virtual shift position. The highest virtual gear ratio is set for first gear, and the virtual gear ratio becomes lower in the order of second gear, third gear, and fourth gear. The transmission model MOD11 calculates virtual transmission torque using the virtual gear ratio and later-described virtual engine torque. The virtual transmission torque is virtual torque output from the virtual transmission. The motor control device 210 controls the inverter 4 so as to change the output torque of the electric motor 6 according to the virtual transmission torque. The virtual transmission torque changes discontinuously in accordance with switching of the virtual gear ratio. Such a discontinuous change in virtual transmission torque causes torque shock in the vehicle 200, creating a feel of a vehicle provided with a stepped transmission.

The engine model MOD12 calculates a virtual engine speed and virtual engine torque. The virtual engine speed is calculated from the vehicle speed and the comprehensive gear ratio. The virtual engine torque is calculated from the virtual engine speed and the accelerator operation amount. In the engine model MOD12, the relation between the virtual engine speed and the virtual engine torque is defined for each accelerator operation amount. Torque characteristics of the engine model MOD12 can be set to characteristics assumed for a gasoline engine, or can be set to characteristics assumed for a diesel engine. Also, the characteristics can be set to characteristics assumed for a naturally aspirated engine, or can be set to characteristics assumed for a turbocharged engine.

Returning to FIG. 6 again, the configuration of the control system of the vehicle 200 will be further described.

An object to be controlled by the sound control device 220 is the amplifier 30. The sound control device 220 controls the amplifier 30 to change the sound pressure of the simulated engine sound emitted from the speaker 32. The sound control device 220 makes up a sound generator along with the speaker 32 and the amplifier 30.

The gear stage of the transfer case 8 obtained from signals from the gear stage sensor 44 is input to the sound control device 220. The sound control device 220 executes the processing P221 based on the gear stage. In the processing P221, a sound pressure map to be used to control the amplifier 30 is selected. The sound pressure map includes a map for low gear that is selected when the gear stage is L4, and a map for high gear that is selected when the gear stage is H4 and when the gear stage is H2. The sound control device 220 selects the sound pressure map in accordance with the current gear stage of the transfer case 8.

The virtual shift position of the pseudo shifter 50 obtained from signals from the shift position sensor 46, the vehicle speed obtained from signals from the vehicle speed sensor 40, and the accelerator operation amount obtained from signals from the accelerator position sensor 42, are further input to the sound control device 220. The sound control device 220 executes processing P222 based on the virtual shift position, the vehicle speed, and the accelerator operation amount, by using the sound pressure map selected in the processing P221. In the processing P222, a sound pressure according to the virtual shift position, the vehicle speed, and the accelerator operation amount is calculated using the sound pressure map. The sound control device 220 controls the amplifier 30 so as to realize the sound pressure calculated in the processing P222.

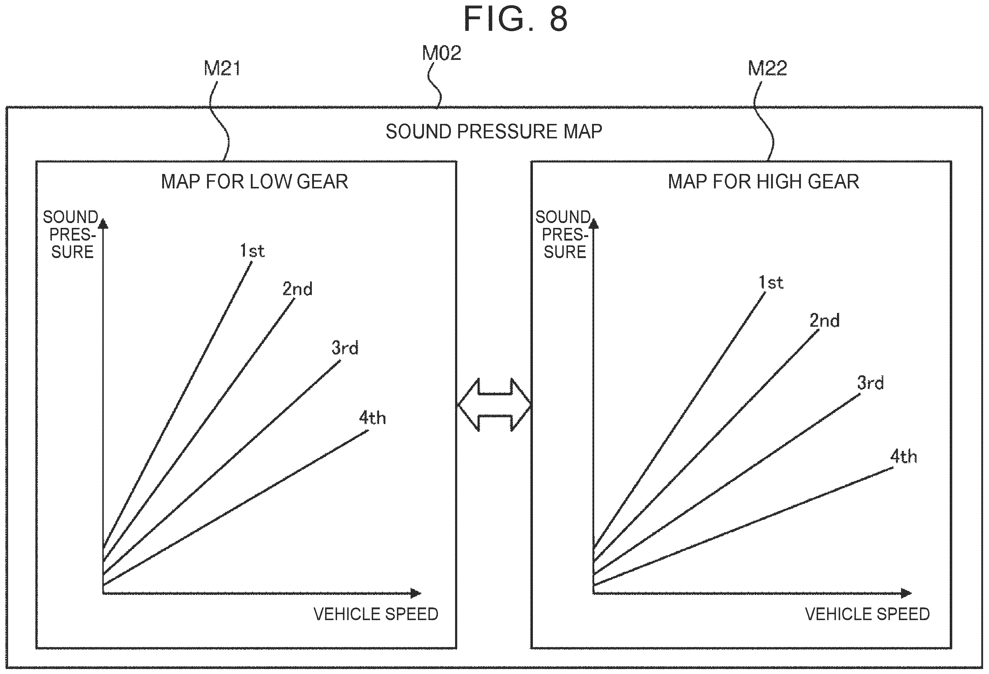

Now, FIG. 8 is a diagram that shows an example of the sound pressure map according to the second embodiment. In a sound pressure map M02, sound pressure data is set with respect to the vehicle speed, such that the sound pressure increases as the vehicle speed increases. Also, the sound pressure data is also set with respect to the virtual shift position such that the sound pressure increases as the virtual gear ratio increases. Difference between a map for low gear M21 and a map for high gear M22 is in the magnitude of the sound pressure for the same vehicle speed. The two maps M21 and M22 are created such that, when compared at the same vehicle speed and the same virtual shift position, the map for low gear M21 has a greater sound pressure, and the map for high gear M22 has a smaller sound pressure. In the processing P222, the sound pressure is calculated from the vehicle speed using the sound pressure map selected from the map for low gear M21 and the map for high gear M22 in the processing P221.

### 2-2. Sound Pressure Control

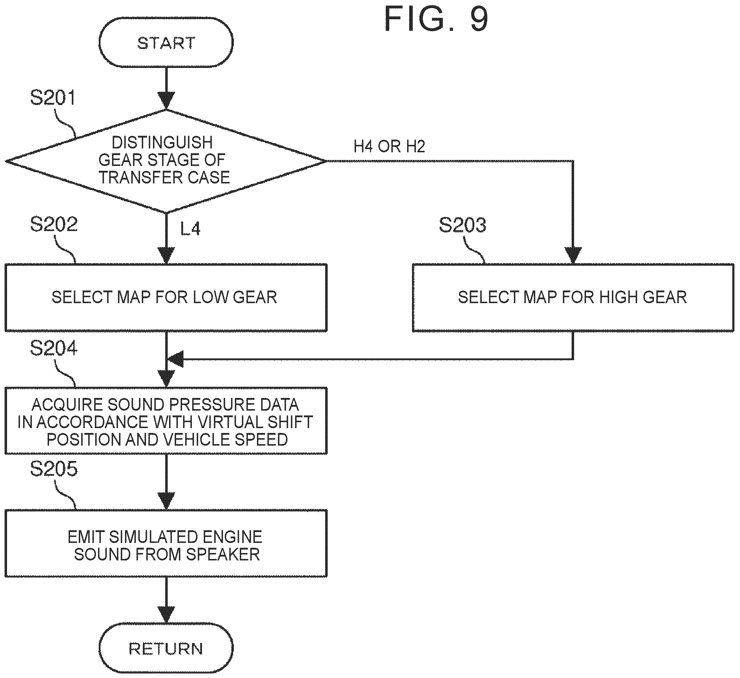

FIG. 9 is a diagram showing a flow of sound pressure control executed by the control device 201 in the vehicle 200. First, in step S201, the gear stage of the transfer case 8 is distinguished. When the gear stage is L4, the flow advances to step S202, and the map for low gear is selected. When the gear stage is H4 or H2, the flow advances to step S203, and the map for high gear is selected. In step S204, sound pressure data corresponding to the virtual shift position and the vehicle speed is acquired from the sound pressure map selected in step S202 or step S203. Then, in step S205, the simulated engine sound is generated from the speaker 32 in accordance with the sound pressure data acquired in step S204.

For example, when the gear stage of the transfer case 8 is L4, and the virtual shift position is shifted from fourth gear to third gear by operating the pseudo shifter 50, the sound pressure is increased in accordance with the map for low gear M21. When the gear stage of the transfer case 8 is H4, and the virtual shift position is shifted from fourth gear to third gear by operating the pseudo shifter 50, the sound pressure is increased in accordance with the map for high gear M22. Note however, that when the vehicle speed is the same, the sound pressure when the virtual shift position is shifted to third gear is greater when the gear stage of the transfer case 8 is L4 than when it is H4. The sound pressure of the simulated engine sound increasing as the comprehensive gear ratio increases is similar to the change in engine sound that occurs in conjunction with shifting operations in conventional manual shift engine vehicles equipped with a conventional transmission (main transmission) and a transfer case (sub-transmission). Accordingly, by changing the sound pressure of the simulated engine sound in accordance with the gear shifting operations of the driver through the sound pressure control described above, the expectations of drivers, particularly of drivers who are accustomed to conventional manual shift engine vehicles, can be satisfied.

### 2-3. Modifications

The modifications of the first embodiment illustrated in FIG. 5 can also be applied to the present embodiment. That is to say, in FIG. 6, the amplifier 30 may be replaced with a frequency modulation controller, and the sound control device 220 may be replaced with a control device for the frequency modulation controller. The frequency modulation controller may be an equalizer. The sound pressure map may also be replaced with a frequency map. In the frequency map, frequency data is set with respect to vehicle speed such that the frequency increases as the vehicle speed increases. Also, frequency data is set for the virtual shift position such that the frequency becomes higher as the virtual gear ratio becomes greater. Frequency maps includes a map for low gear and a map for high gear. In this modification of the present embodiment, the difference between the map for low gear and the map for high gear is the height of the frequency for the same vehicle speed. The two maps are created such that, when compared at the same vehicle speed and the same virtual shift position, the map for low gear has a higher frequency and the map for high gear has a lower frequency.

As another modification, the sound pressure of the simulated engine sound may be changed in accordance with the gear shifting operations of the driver as in the second embodiment, while at the same time, the frequency of the simulated engine sound may be changed in accordance with the gear shifting operations of the driver as in the modification above.

### 3. Third Embodiment

### 3-1. Configuration of Control System of Vehicle

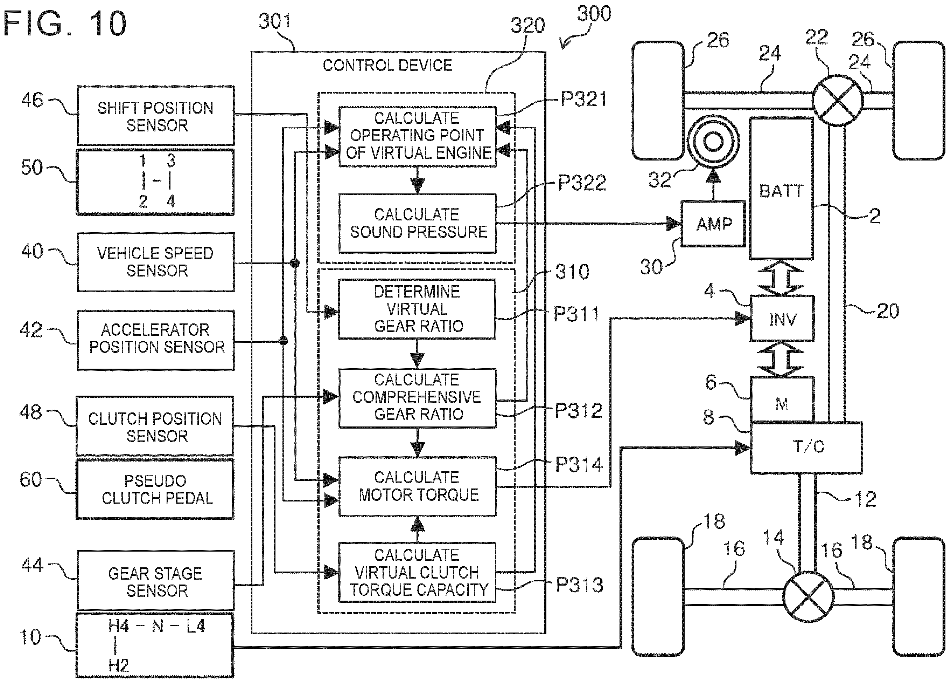

FIG. 10 is a diagram that schematically illustrates a configuration of a vehicle 300 according to a third embodiment. Of the components of the vehicle 300 illustrated in FIG. 10, those having functions in common with the vehicle 100 according to the first embodiment or the vehicle 200 according to the second embodiment are denoted by the same signs. A configuration of a power system of the vehicle 300 is the same as that of the vehicle 100 according to the first embodiment, and accordingly description thereof will be omitted, and a configuration of a control system of the vehicle 300 will be described.

The vehicle 300 further includes a pseudo clutch pedal 60 in addition to the configuration of the vehicle 200 according to the second embodiment. The pseudo clutch pedal 60 is a dummy that is different from a real clutch pedal. The pseudo clutch pedal 60 has a structure mimicking a clutch pedal provided to a conventional manual shift engine vehicle. For example, the pseudo clutch pedal 60 includes a reaction force mechanism that generates a reaction force in response to depression of the pseudo clutch pedal 60 by the driver. A start point position of the pseudo clutch pedal 60 is a position when no depressing force is applied to the pseudo clutch pedal 60, and an end point position of the pseudo clutch pedal 60 is a position when the pseudo clutch pedal 60 is fully depressed. The driver can operate the pseudo clutch pedal 60 from the start point position to the end point position against the reaction force from the reaction force mechanism.

Note that although the pseudo clutch pedal 60 is a pedal-type manipulator that is operated by the foot, a lever-type manipulator or a dial-type manipulator operated by hand may also be provided as a pseudo clutch manipulator. Various types of structures can be employed for the pseudo clutch manipulator, as long as the pseudo clutch manipulator can be operated by the driver from the start point position to the end point position against reaction force, and enables the driver to have a feel of operation similar to that of a clutch pedal provided in a conventional manual shift engine vehicle by foot or hand.

The vehicle 300 includes a clutch position sensor 48. The clutch position sensor 48 is provided to the pseudo clutch pedal 60, and outputs signals indicating the amount of depression of the pseudo clutch pedal 60. Since the vehicle 300 does not include an actual clutch, the amount of operation of the pseudo clutch pedal 60, i.e., the clutch operation amount, is a virtual clutch operation amount. The vehicle 300 also includes the vehicle speed sensor 40, the accelerator position sensor 42, the gear stage sensor 44, and the shift position sensor 46. In addition to these sensors, many other sensors are provided in the vehicle 300.

The vehicle 300 is equipped with a control device 301. Sensors and equipment that are installed in the vehicle 300 as objects of control are connected to the control device 301 via an in-vehicle network. In the same way as the control device 101 according to the first embodiment and the control device 201 according to the second embodiment, the control device 301 is typically an electronic control unit, and includes an interface, memory, and a processor that are omitted from illustration. The control device 301 includes a motor control device 310 and a sound control device 320. Specifically, the processor functions at least as the motor control device 310 and the sound control device 320 by programs stored in the memory being executed by the processor. The processor functioning as the motor control device 310 and the processor functioning as the sound control device 320 may be different processors, or may be the same processor.

An object to be controlled by the motor control device 310 is the inverter 4. The virtual shift position of the pseudo shifter 50 obtained from signals from the shift position sensor 46, and the gear stage of the transfer case 8 obtained from signals from the gear stage sensor 44, are input to the motor control device 310. The motor control device 310 executes processing P311 based on the virtual shift position. In the processing P311, a virtual gear ratio of the vehicle 300 is determined using a manual shift engine vehicle model, which will be described later. Next, the motor control device 310 executes processing P312 based on the gear stage of the transfer case 8 and the virtual gear ratio determined in the processing P311. In the processing P312, the comprehensive gear ratio is calculated by multiplying the gear ratio of the transfer case 8, determined by the gear stage, by the virtual gear ratio.

Also, the virtual clutch operation amount of the pseudo clutch pedal 60 obtained from signals from the clutch position sensor 48 is input to the motor control device 310. The motor control device 310 executes processing P313 based on the virtual clutch operation amount. In the processing P313, virtual clutch torque capacity is calculated using the manual shift engine vehicle model.

The vehicle speed obtained from signals from the vehicle speed sensor 40 and the accelerator operation amount obtained from signals from the accelerator position sensor 42 are further input to the motor control device 310. The motor control device 310 executes processing P314 based on the vehicle speed, the accelerator operation amount, the comprehensive gear ratio calculated in the processing P312, and the virtual clutch torque capacity calculated in the processing P313. In the processing P314, the torque to be generated by the electric motor 6 is calculated from the vehicle speed, the accelerator operation amount, the comprehensive gear ratio, and the virtual clutch torque capacity, using the manual shift engine vehicle model. The motor control device 310 controls the inverter 4 so as to cause the electric motor 6 to generate the torque obtained from the manual shift engine vehicle model.

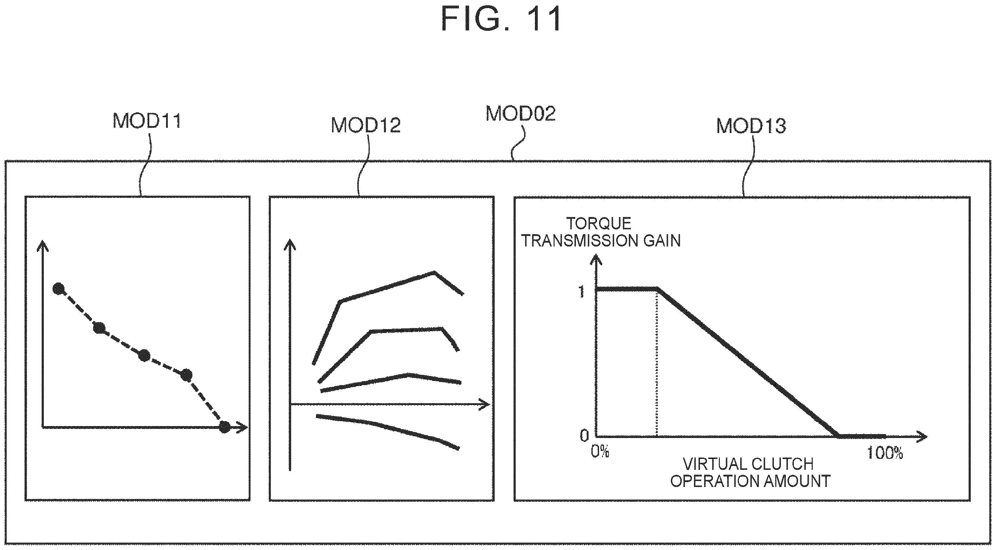

Now, the manual shift engine vehicle model used by the motor control device 310 will be described with reference to FIG. 11. As shown in FIG. 11, a manual shift engine vehicle model MOD02 is made up of a transmission model MOD11, an engine model MOD 12, and a clutch model MOD13. A clutch virtually realized by the manual shift engine vehicle model MOD02 will be referred to as "virtual clutch". The clutch model MOD13 models the virtual clutch. Contents of the transmission model MOD11 and the engine model MOD12 are the same as those of the manual shift engine vehicle model MOD01 according to the second embodiment.

The clutch model MOD13 calculates a torque transmission gain. The torque transmission gain is a gain for calculating the degree of torque transmission of the virtual clutch in accordance with the virtual clutch operation amount. The virtual clutch operation amount is 0% at the start point position of the pseudo clutch pedal 60, and is 100% at the end point position of the pseudo clutch pedal 60. The clutch model MOD 13 gives the torque transmission gain with respect to the virtual clutch operation amount. The torque transmission gain is converted to the clutch torque capacity of the virtual clutch, i.e., the virtual clutch torque capacity. Virtual clutch torque that is input from the virtual clutch to the virtual transmission is then calculated based on a comparison between the virtual clutch torque capacity and the virtual engine torque calculated by the engine model MOD12. In the present embodiment, the transmission model MOD 11 calculates virtual torque using the virtual gear ratio and the virtual clutch torque.

Returning to FIG. 10 again, the configuration of the control system of the vehicle 300 will be further described.

An object to be controlled by the sound control device 320 is the amplifier 30. The sound control device 320 controls the amplifier 30 to change the sound pressure of the simulated engine sound emitted from the speaker 32. The sound control device 320 makes up a sound generator along with the speaker 32 and the amplifier 30.

The vehicle speed obtained from signals from the vehicle speed sensor 40 and the accelerator operation amount obtained from signals from the accelerator position sensor 42 are input to the sound control device 320. Further, the sound control device 320 receives input of the comprehensive gear ratio calculated in the processing P312 and the virtual clutch torque capacity calculated in the processing P313 from the motor control device 310. The sound control device 320 executes processing P321 based on the information that is input. In the processing P321, an operating point of the virtual engine, expressed in terms of virtual engine speed and virtual engine torque, is calculated. The manual shift engine vehicle model MOD02 is used to calculate the operating point of the virtual engine.

The sound control device 320 executes processing P322 based on the operating point of the virtual engine calculated in the processing P321. In the processing P322, the sound pressure corresponding to the operating point of the virtual engine is calculated using the sound pressure map. The sound control device 320 controls the amplifier 30 so as to realize the sound pressure calculated in the processing P322.

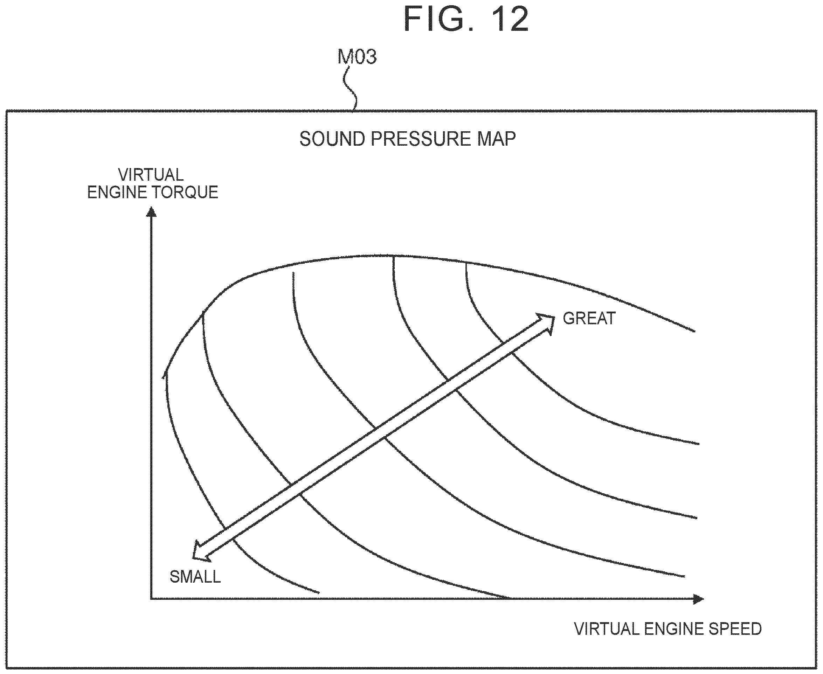

Now, FIG. 12 is a diagram that shows an example of the sound pressure map according to the third embodiment. In a sound pressure map M03, sound pressure data is set with respect to the virtual engine speed such that the sound pressure increases as the virtual engine speed increases. Also, sound pressure data is set with respect to the virtual engine torque such that the sound pressure increases as the virtual engine torque increases. In the first embodiment and the second embodiment, the map for high gear and the map for low gear are prepared, but in the present embodiment, the sound pressure map M03 is used in common, regardless of the gear stage of the transfer case 8.

### 3-2. Sound Pressure Control

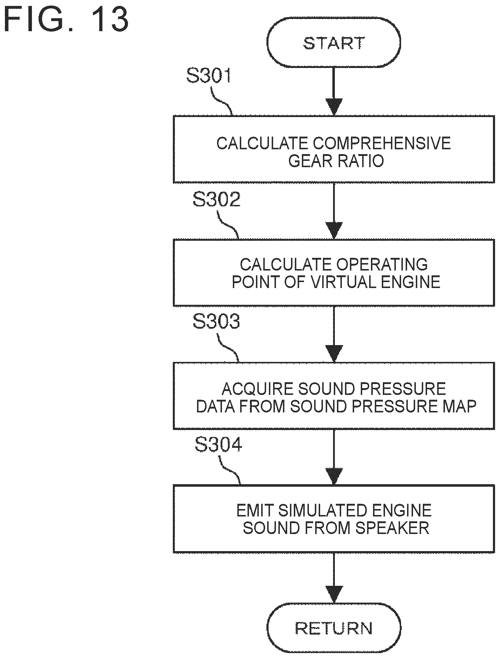

FIG. 13 is a diagram showing a flow of sound pressure control executed by the control device 301 in the vehicle 300. First, in step S301, the comprehensive gear ratio is calculated based on the gear stage of the transfer case 8 and the virtual shift position of the pseudo shifter 50. Next, in step S302, the operating point of the virtual engine is calculated using the comprehensive gear ratio that is calculated in step S301, the vehicle speed, the accelerator operation amount, and so forth. In step S303, sound pressure data corresponding to the operating point of the virtual engine calculated in step S302 is acquired from the sound pressure map. Then, in step S304, the simulated engine sound is emitted from the speaker 32 in accordance with the sound pressure data acquired in step S303.

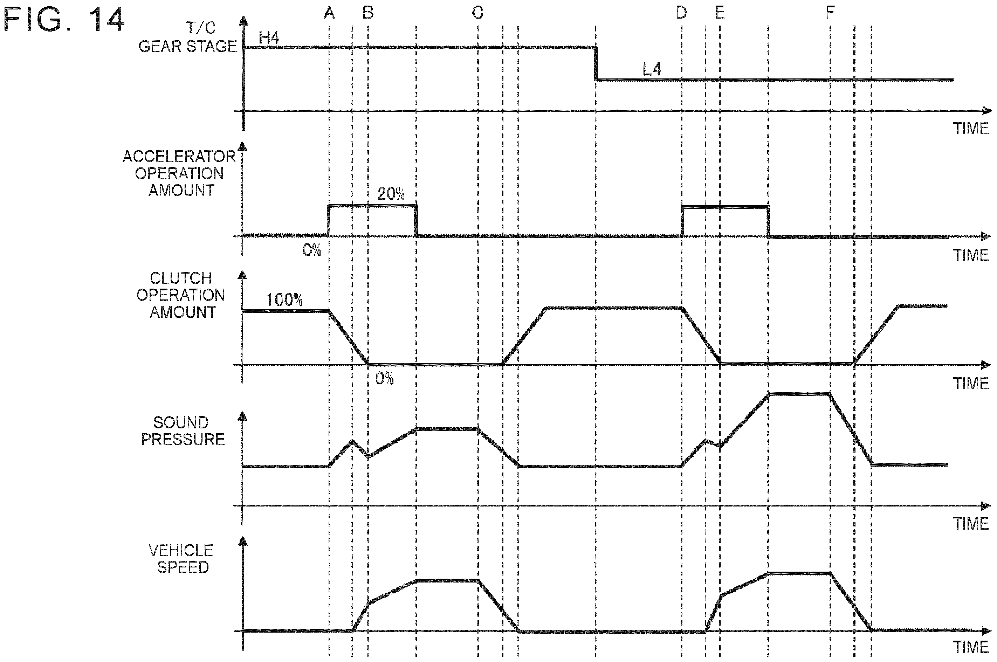

FIG. 14 is a diagram showing an example of a change in sound pressure due to the above sound pressure control. In an initial state, the vehicle 300 is stopped, the virtual shift position of the pseudo shifter 50 is set to first gear, and the gear stage of the transfer case 8 is set to H4. At time A, the accelerator pedal is depressed and the accelerator operation amount is increased to 20%. At the same time, from time A, the virtual clutch operation amount of the pseudo clutch pedal 60 is gradually returned from 100% to 0%. At this time, the manner in which the engine is revved in a state in which the clutch is released is simulated by an increase in the sound pressure of the simulated engine sound.

When the pseudo clutch pedal 60 is further returned, clutch torque capacity of the virtual clutch is generated. At the same time as torque being generated from the electric motor 6 in conjunction with the clutch torque capacity being generated and the vehicle 300 starting to move forward, the virtual engine speed decreases and the sound pressure of the simulated engine sound is reduced. When the pseudo clutch pedal 60 is further returned, the clutch torque capacity increases further, and at time B the virtual clutch is fully engaged. After the virtual clutch is fully engaged, the sound pressure of the simulated engine sound increases as the vehicle speed increases. Even after the accelerator operation amount is returned to 0%, the vehicle 300 continues to travel under inertia. During this time, the simulated engine sound is emitted at a volume that corresponds to the vehicle speed. Then, at time C, the brake pedal is depressed and the vehicle 300 comes to a stop.

When the vehicle 300 is stopped, the pseudo clutch pedal 60 is depressed and the engine state that is simulated is an idling state. While the vehicle 300 is stopped, the gear stage of the transfer case 8 is switched from H4 to L4. Then at time D, the accelerator pedal is depressed and the accelerator operation amount is increased to 20%. At the same time, from time D, the virtual clutch operation amount of the pseudo clutch pedal 60 is gradually returned from 100% to 0%. At this time, the manner in which the engine is revved in a state in which the clutch is released is simulated by an increase in the sound pressure of the simulated engine sound.

Further, when the pseudo clutch pedal 60 is returned, torque is generated from the electric motor 6, the vehicle 300 starts moving forward, and at the same time, the sound pressure of the simulated engine sound is reduced. When the pseudo clutch pedal 60 is further returned, at time E the virtual clutch is fully engaged. After the virtual clutch is fully engaged, the sound pressure of the simulated engine sound increases as the vehicle speed increases. Even after the accelerator operation amount is returned to 0%, the vehicle 300 continues to travel under inertia. During this time, the simulated engine sound is emitted at a volume that corresponds to the vehicle speed. Then, at time F, the brake pedal is depressed and the vehicle 300 comes to a stop.

As shown in FIG. 14, when the gear stage of the transfer case 8 is in L4, the sound pressure of the simulated engine sound increases more significantly in conjunction with increase in the vehicle speed than when the gear stage is in H4. This is due to the comprehensive gear ratio increasing as the gear stage of the transfer case 8 is switched from H4 to L4. When the comprehensive gear ratio increases, the virtual engine speed increases at the same vehicle speed, and accordingly the sound pressure of the simulated engine sound is increased in accordance with the sound pressure map M03. By increasing the sound pressure of the simulated engine sound in accordance with the switching of the gear stage of the transfer case 8 from H4 to L4, the expectations of drivers, particularly drivers who are accustomed to conventional manual shift engine vehicles, can be satisfied. Also, the operations of the pseudo clutch pedal 60 are reflected in the sound pressure calculation of the simulated engine sound, the change in sound that the driver expects due to clutch operations can be made to correspond to the change in the simulated engine sound, without causing any unpleasant sensations for the driver.

### 3-3. Modifications

The modifications of the first embodiment illustrated in FIG. 5 can also be applied to the present embodiment. That is to say, in FIG. 10, the amplifier 30 may be replaced with a frequency modulation controller, and the sound control device 320 may be replaced with a control device for the frequency modulation controller. The frequency modulation controller may be an equalizer. The sound pressure map may also be replaced with a frequency map. In the frequency map, frequency data is set with respect to the virtual engine speed such that the frequency becomes higher as the virtual engine speed becomes higher. Also, frequency data is set for the virtual engine torque such that the frequency becomes higher as the virtual engine torque increases.

As another modification, the sound pressure of the simulated engine sound may be changed in accordance with the operating point of the virtual engine as in the third embodiment, while at the same time, the frequency of the simulated engine sound may be changed in accordance with the operating point of the virtual engine as in the above modifications.

According to a first aspect of the present disclosure, a vehicle includes a transmission. The transmission is configured to enable a user to manually switch a gear ratio, and is provided between a power source and drive wheels. The power source of the present vehicle may be a quieter power source than an internal combustion engine, such as an electric motor for example. According to the first aspect, the vehicle is provided with a sound generator that artificially generates a sound when the vehicle is traveling. The sound generator includes at least a processor and a speaker. The processor raises a frequency of the sound that is generated the higher the gear ratio of the transmission is, or increases the sound pressure of the sound that is generated the higher the gear ratio of the transmission is. Alternatively, the processor raises the frequency of the sound that is generated and also increases the sound pressure of the sound that is generated the higher the gear ratio of the transmission is. Further, the processor may raise the frequency of the sound that is generated the greater the vehicle speed of the own vehicle is, or increase the sound pressure of the sound that is generated the greater the vehicle speed of the own vehicle is. Alternatively, the processor may raise the frequency of the sound that is generated and also increase the sound pressure of the sound that is generated the greater the vehicle speed of the own vehicle is. Also, the processor may raise the frequency of the sound that is generated the greater the accelerator operation amount is, or may increase the sound pressure of the sound that is generated the greater the accelerator operation amount is. Alternatively, the processor may raise the frequency of the sound that is generated and also increase the sound pressure of the sound that is generated the greater the accelerator operation amount is.

According to a second aspect of the present disclosure, the power source may be an electric motor, and the vehicle may further include a pseudo shifter that is capable of selecting a plurality of virtual shift positions. Also, according to the second aspect, the processor may raise the frequency of the sound that is generated the lower a stage of the virtual shift position selected by the pseudo shifter is, or increase the sound pressure of the sound that is generated the lower the stage of the virtual shift position selected by the pseudo shifter is. Alternatively, the processor may raise the frequency of the sound that is generated and also increase the sound pressure of the sound that is generated the lower the stage of the virtual shift position selected by the pseudo shifter is. Further, according to the second aspect, the vehicle may further include a motor control device that changes a torque of the electric motor serving as the power source in accordance with the virtual shift position selected by the pseudo shifter, the vehicle speed of the own vehicle, and the accelerator operation amount. The motor control device may increase the torque of the electric motor at a same vehicle speed and a same accelerator operation amount, and also limit a vehicle speed range at which the virtual shift position is selectable to a lower speed side, the lower the stage of the virtual shift position that is selected is.

According to a third aspect of the present disclosure, the power source may be an electric motor, and the vehicle may include a pseudo clutch manipulator that is operable against a reaction force from a start point position to an end point position. Also, according to the third aspect, the processor may temporarily lower the frequency of the sound that is generated, or may temporarily reduce the sound pressure of the sound that is generated, while the pseudo clutch manipulator is being returned from the end point position to the start point position. Alternatively, the processor may temporarily lower the frequency of the sound that is generated and also temporarily reduce the sound pressure of the sound that is generated, while the pseudo clutch manipulator is being returned from the end point position to the start point position. Furthermore, according to the third aspect, the vehicle may include a motor control device that changes a torque of the motor serving as the power source in accordance with an operation amount of the pseudo clutch manipulator, the vehicle speed of the own vehicle, and the accelerator operation amount. The motor control device may reduce the torque of the electric motor when the pseudo clutch manipulator is at the end point position, and generate the torque of the electric motor partway in the process of returning the pseudo clutch manipulator from the end point position to the start point position.

## Claims

1. A vehicle (100; 200; 300), comprising:
a transmission (8) that is provided between a power source and drive wheels (18, 26), and that is configured to switch a gear ratio manually by a user; and
a sound generator that is configured to artificially generate a sound when the vehicle (100; 200; 300) is traveling, wherein
the sound generator includes at least a processor (120; 130; 220; 320) and a speaker (32), and
the processor (120; 130; 220; 320) is configured to execute at least one of raising a frequency of the sound the higher the gear ratio is, and increasing a pressure of the sound the higher the gear ratio is.

2. The vehicle (100; 200; 300) according to claim 1, wherein the processor (120; 130; 220; 320) is configured to execute at least one of raising the frequency of the sound the higher a vehicle speed of the vehicle (100; 200; 300) is, and increasing the pressure of the sound the higher the vehicle speed is.

3. The vehicle (100; 200; 300) according to claim 1, wherein the processor (120; 130; 220; 320) is configured to execute at least one of raising the frequency of the sound the greater an accelerator operation amount is, and increasing the pressure of the sound the greater the accelerator operation amount is.

4. The vehicle according to any one of claims 1 to 3, wherein the power source is an electric motor (6).

5. The vehicle (200; 300) according to claim 4, further comprising a pseudo shifter (50) that is configured to select one virtual shift position out of a plurality of virtual shift positions, wherein the processor (220; 320) is configured to execute at least one of raising the frequency of the sound the lower a stage of the virtual shift position selected by the pseudo shifter (50) is, and increasing the pressure of the sound the lower the stage of the virtual shift position selected by the pseudo shifter (50) is.

6. The vehicle (200; 300) according to claim 5, further comprising a motor processor (210; 310) configured to change a torque of the electric motor (6) in accordance with the virtual shift position selected by the pseudo shifter (50), a vehicle speed of the vehicle (200; 300), and an accelerator operation amount,
wherein the motor processor (210; 310) is configured to
increase the torque at a same vehicle speed and a same accelerator operation amount, the lower the stage of the virtual shift position selected by the pseudo shifter (50) is, and
limit a vehicle speed range at which the virtual shift position is selectable to a lower speed, the lower the stage of the virtual shift position selected by the pseudo shifter (50) is.

7. The vehicle (300) according to claim 4, further comprising a pseudo clutch manipulator (60) that is configured to be operated against a reaction force from a start point position to an end point position, wherein the processor (320) is configured to execute at least one of temporarily lowering the frequency of the sound, and temporarily reducing the pressure of the sound, while the pseudo clutch manipulator (60) is being operated from the end point position to the start point position.

8. The vehicle (300) according to claim 7, further comprising a motor processor (310) that is configured to change a torque of the electric motor (6) in accordance with an operation amount of the pseudo clutch manipulator (60), a vehicle speed of the vehicle (300), and an accelerator operation amount,
wherein the motor processor (310) is configured to
reduce the torque when the pseudo clutch manipulator (60) is at the end point position, as compared to partway in a process of returning from the end point position to the start point position, and
generate the torque partway in the process of returning the pseudo clutch manipulator (60) from the end point position to the start point position.
